# EUROPÄISCHE PATENTSCHRIFT

(11) **EP 1 406 813 B1**
(45) Veröffentlichungstag und Bekanntmachung des Hinweises auf die Patenterteilung: **11.01.2006**
(21) Anmeldenummer: 02748765.1
(22) Anmeldetag: 11.06.2002
(51) Int. Cl.: B64D 9/00, B64C 1/20, B60P 7/13

(54) **VERFAHREN UND VORRICHTUNG ZUM POSITIONIEREN VON FRACHTBEHÄLTERN AUF EINER LADEFLÄCHE**
METHOD AND DEVICE FOR POSITIONING FREIGHT CONTAINERS ON A LOADING SURFACE
PROCEDE ET DISPOSITIF DE POSITIONNEMENT DE CONTENEURS DE FRET SUR UNE SURFACE DE CHARGEMENT

(30) Priorität: 12.06.2001 DE 10128390
(43) Veröffentlichungstag der Anmeldung: 14.04.2004
(73) Patentinhaber: Pfalz-Flugzeugwerke GmbH, 67346 Speyer (DE)
(72) Erfinder: EITZENBERGER, Berthold, 67059 Ludwigshafen (DE); HUMMEL, Roland, 67373 Dudenhofen (DE); OETKEN, Axel, 27777 Ganderkesee (DE); OSTERMAYER, Ludger, 67360 Lingenfeld (DE); HARTMANN, Jürgen, D-67112 Mutterstadt (DE)
(74) Vertreter: Hörschler, Wolfram Johannes
(86) Internationale Anmeldenummer: PCT/EP2002/006396
(87) Internationale Veröffentlichungsnummer: WO 2002/100718

(56) Entgegenhaltungen:
- EP-A- 0 496 974
- EP-A- 0 563 563
- GB-A- 2 043 584
- US-A- 3 262 588
- US-A- 3 709 450
- US-A- 4 457 649
- US-A- 4 583 896

## Beschreibung

Die Erfindung bezieht sich auf ein Verfahren zum Positionieren von Frachtbehältern, so zum Beispiel von Containern standardisierter Abmessungen im Frachtladedeck von Luftfahrzeugen und auf ein dazu geeignetes Luftfahrzeug.

GB 2 043 584 bezieht sich auf ein Frachtladesystem für Luftfracht. Ein Frachtladesystem für ein Luftfahrzeug enthält einen Frachtladebereich mit überrollbaren Feststellelementen, zur Verhinderung der Bewegung von Fracht. Der Frachtraum umfasst Kugelmatten mit Antriebselementen für Querbewegungen sowie Sensoren zur Detektion der Position von Frachtgegenständen. Es sind weitere Antriebseinheiten vorgesehen, mit welchen eine Bewegung von Fracht in Längsrichtung herbeigeführt werden kann. Die Frachtgegenstände werden über Klinken geführt und gesichert, sowie mittels weiterer Halteeinrichtungen, die elektrisch betreibbar sind. Eine Längsbewegung von Frachtgegenständen so z.B. Containern, kann über Rollenbahnen realisiert werden. Das Frachtladesystem wird automatisch gesteuert, so dass ein Frachtgegenstand bzw. ein Container zur vorbestimmten Position bewegbar ist und dort auch arretiert werden kann.

US 3, 620, 353 bezieht sich auf ein kettengetriebenes Fracht-Bewegungssystem. Gemäß dieser Lösung wird ein Fracht-Bewegungssystem vorgeschlagen, welches einen in den Frachtraumboden integrierten Fördermechanismus umfaßt, der als Kettentrieb ausgebildet über einen geeigneten Motor angetrieben ist. Die Kette umfaßt eine Anzahl untereinander verbundener Rollen mit Trägerflächen, die über druckbeaufschlagbare Röhrenkörper ausgedehnt werden können, so daß sich ein gleichmäßiger Druckaufbau unterhalb der Bodenfläche einer im Frachtraum zu positionierenden Palette oder eines Frachtbehälters einstellt. Durch den Reibkontakt zwischen dem Boden der zu positionierenden Palette oder des Behälters wird dieser auf Trägerrollen von einer Position im Frachtraum zur nächsten Position bewegt. Jede Positionierungsstation im Frachtraum ist mit einer eigenen druckbeaufschlagbaren bzw. drucicentlastbaren Röhre versehen, so daß die zu positionierende Palette bzw. der zu positionierende Behälter im Frachtraumverfahren oder an einer entsprechenden Positionierungsstation angehalten werden kann.

Ein Klinkensystem ist mit dem kettenförmig ausgebildeten Fördermechanismus verbunden, mit welchem die Paletten oder die Container in ausgewählten, vorher bestimmten Positionen im Frachtraum positioniert werden können und über welches sich die druckbeaufschlagbaren röhrenförmigen Körper entlasten lassen, so daß der Fördermechanismus die zu positionierenden Paletten bzw. Container freigibt.

In Frachtlagerräumen von Flugzeugen zum Beispiel befinden sich im Zugangsbereich der Frachtladeräume Kugelmatten und im weiteren, sich im Inneren des Flugzeugrumpfes erstreckenden Bereich sind Rollenbahnen in den Frachtraumboden eingelassen, um Transportbehälter wie Container oder Paletten leicht und schnell bewegen zu können. Im Einfahrbereich des Laderaumes werden die Transporteinheiten in Y-Richtung gesehen (quer zum Flugzeugrumpf) eingefahren, bevor sie über die im Frachtladeraumboden vorgesehenen Rollenbahnen an ihre vorgesehene Transportposition verfahren werden. An den den Transporteinheiten jeweils zugewiesenen Positionen werden die Container oder Paletten verriegelt, gegebenenfalls auch verzurrt, um ein Verrutschen der Transporteinheiten sowie deren Anschlagen an den Wänden des Frachtladeraumes zu verhindern.

In Frachtladeräumen von Luftfahrzeugen, insbesondere Flugzeugen kann der hintere Bereich des Rumpfes (Bulk) mit Containern beladen werden. Das Verfahren von Containern oder Frachtgegenständen in den Bulk kann per Hand oder mittels einer Antriebseinheit (PTU Power Drive Unit) geschehen. Im Kugelmattenbereich, welcher dem Bulkbereich eines Frachtladeraumes vorgelagert ist, befinden sich auf einer Seite Führungselemente, denen auf der anderen Seite überfahrbare Führungselemente gegenüberliegen. Die überfahrbaren Führungselemente sind in Y-Richtung in Bezug auf den Frachtladeraum, d.h. quer zur Längsrichtung des Rumpfes eines Flugzeuges versetzbar. Die Befestigung der Führungselemente oder Riegel in den Förderbahnen im Bodenbereich des Frachtladeraumes erfolgt mittels Bolzen.

Die Nachteile dieser bekannten Ausführungsform sind darin zu erblicken, dass zusätzliche Querrollenbahnen erforderlich sind. Ferner ist ein zusätzlicher Unterbau unter den Querrollenbahnen erforderlich, um die auftretenden Kräfte auf die Förderbahnen, die beim Anschlagen von Frachtgegenständen oder Frachtcontainern auftreten, in X-Richtung übertragen zu können. Anstelle von üblicherweise verwendeten Standardkugelmatten im Bodenbereich des Frachtladeraumes sind im Bereich der Querrollenbahnen zusätzlich zu konfektionierende Sonderkugelmatten erforderlich. Ein weiterer erheblicher Nachteil dieser Lösung ist die Unterbrechung der Wärmeisolierung durch den Einbau der Querrollenbahnen, was bei zu starker Abkühlung der Kabinenluft zur Bildung von Kondensat führen kann. In logistischer Hinsicht ist bei der bekannten Lösung eine erhebliche Teilevielfalt vorzuhalten. Ferner ist das Gewicht der eingesetzten Bauteile zum Positionieren von Containern in den Bulkbereich eines Frachtladeraumes mit dem Nachteil behaftet, dass dieser ein hohes Gewicht aufweist.

Ausgehend vom skizzierten Stand der Technik liegt der Erfindung die Aufgabe zugrunde, die Ausrichtung und die Bewegung von sperrigen Frachtgegenständen oder Frachtbehältern standardisierter Größe in beengte Stellflächen von Frachtladeräumen zu realisieren.

Erfindungsgemäß wird diese Aufgabe durch die Merkmale der Patentansprüche 1 und 7 gelöst.

Die Vorteile der erfindungsgemäßen Lösung sind vor allem darin zu erblicken, daß die ersten und zweiten Führungselemente an in die Bodenfläche des Frachtladeraumes integrierte Förderbahnen montiert werden können, so daß sie an den Stellen auf der Bodenfläche des Frachtladeraumes positionierbar sind, an denen eine Ausrichtung von Frachtgegenständen bzw. Frachtbehältern zum Einführen in beengte Stellflächen durchgeführt werden kann. Zu diesem Zweck ist ein erstes Führungselement in vorteilhafter Weise als von dem Gewicht des zu stauenden Frachtgegenstandes bzw. des Frachtbehälters standardisierter Größe überfahrbar und taucht dadurch in die Bodenfläche des Frachtladeraumes ein. Nach Passage des sperrigen Frachtgegenstandes bzw. des Frachtbehälters standardisierter Abmessungen schnellt der federvorbelastete Führungsabschnitt des ersten Führungselementes wieder in seine ausgefahrene Position und kann somit in Zusammenwirken mit einem weiteren, den Frachtgegenstand bzw. den Frachtbehälter ausrichtenden, mit einer aufstellbaren Fläche versehenen Führungselement den sperrigen Frachtbehälter so positionieren, daß dieser über die an den Förderbahnen vorgesehenen, in beide Umdrehungsrichtungen antreibbaren Antriebseinheiten in seine endgültige Stellposition verfahren werden kann. Durch die Vornahme der Ausrichtung des zu stauenden Frachtbehälters an einer räumlich weniger beengten Stelle im Frachtladeraum ist dessen genaue Ausrichtung möglich.

Insbesondere ist mit dem erfindungsgemäßen Verfahren die Ausnutzung von Heckbereichen von Luftfahrzeugen möglich, indem ein entsprechend des vorgesehenen weiteren Stellplatzes oder mehrerer vorgesehener Stellplätze in zusätzlichen Stellflächenbereichen eines Frachtladeraumes Frachtbehälter oder Frachtgegenstände im Ladetorbereich des Frachtladeraumes, wo genügend Platz zur Verfügung steht, ausgerichtet werden können und sich die Positionen der Ausrichteelemente insbesondere an die Größe der jeweils zu verladenden und in die Stellplätze einzuführenden Frachtbehältergrößen anpassen lassen. Damit können im zusätzlichen Stellflächenbereich eines Frachtladeraumes Frachtbehälter oder Frachtgegenstände hintereinanderliegend oder nebeneinanderliegend aufgenommen und in ihren Stellplätzen verriegelt werden. Weiterhin kann mit dem erfindungsgemäßen Verfahren zur Positionierung von Frachtbehältern und dem anschließenden Einführen in definierte Stellplätze erreicht werden, dass die durch Fluchten einer Förderbahn mit darin aufgenommenen zweiten aufstellbaren Führungselementen mit einer Begrenzungsfläche eines Stellplatzes, nur minimale Modifikationen in der Bodenfläche eines Frachtladeraumes eines Luftfahrzeuges erforderlich sind.

In Weiterbildung des der Erfindung zugrundeliegenden Gedankens können die über die Frachtgegenstände oder Frachtbehälter in die zweiten Führungselemente eingeleiteten Kräfte quer zur zweiten Richtung, d.h. zur X-Richtung in die Förderbahnen in der Bodenfläche des Frachtladeraumes eingeleitet werden. Dies spart zusätzlich vorzusehende Versteifungskonstruktionen in der Rumpfschale eines Luftfahrzeuges. Die lösbare Arretierung der ersten und zweiten Führungselemente an den Förderbahnen oder quer zu den Förderbahnen verlaufenden Förderbahnabschnitten ermöglicht es in vorteilhafter Weise, die Ausrichteposition in eine erste Richtung (Y-Richtung) an die Größe bzw. die Abmessungen von im Frachtladeraum zu stauenden sperrigen Frachtgegenständen bzw. Frachtbehältern anzupassen. Wird beispielsweise bei einem Transport eine bestimmte Anzahl von Frachtbehältern standardisierter Größe transportiert, können in der Bodenfläche des Frachtladeraumes andere Ausrichtepositionen für die Frachtbehälter erforderlich sein, im Vergleich zu einem Transport einer größeren Anzahl von Frachtbehältern, die kleinere Außenabmessungen aufweisen.

Die Antriebseinheiten in der Bodenfläche, bevorzugt ausgestaltet als PDU (= Power Drive Unit) sind in der Bodenfläche in X-Richtung wirkend orientiert. Der Antrieb der Antriebseinheiten, die die Unterseite der auszurichtenden und zu stauenden sperrigen Frachtgegenstände bzw. der Frachtbehälter reibschlüssig ergreifen und fördern, kann sowohl in X-Richtung, d.h. in Längsrichtung des Frachtladeraumes, erfolgen; alternativ ist auch ein Antrieb der Antriebswalzen der Antriebseinheiten in zur X-Richtung entgegengesetzte Richtung des Frachtladeraumes möglich. Daneben können die Antriebseinheiten in der Bodenfläche des Frachtladeraumes an den dort vorgesehenen Förderbahnen auch in Y-Richtung wirkend aufgenommen werden, wobei an den so orientierten Antriebseinheiten beide Umdrehungsrichtungen frei gewählt werden können.

In bevorzugter Weiterbildung des der Erfindung zugrundeliegenden Gedankens nehmen Führungsabschnitte des ersten Führungselementes, wenn durch einen sperrigen Frachtgegenstand oder einen Frachtbehälter belastet, eine in die Bodenfläche des Frachtladeraumes eingefahrene Position an und schnellen erst nach Passage der Unterseite des sperrigen Frachtgegenstandes oder des Frachtbehälters in ihre ausgefahrene Position empor. Damit ist ein sofortiges Sichern des auszurichtenden sperrigen Frachtgegenstandes/Frachtbehälters an einem ersten Führungselement und einem entsprechend aktivierten zweiten Führungselement auf der Bodenfläche des Frachtladeraumes möglich, ohne daß der sperrige Frachtgegenstand/Frachtbehälter sich selbst überlassen bleibt.

Erfindungsgemäß wird die Aufgabe weiterhin gemäß Anspruch 7 auch durch einen Luftfahrzeug mit einer Vorrichtung zum Positionieren von Frachtgegenständen oder Frachtbehältern (3) innerhalb des Luftfahrzeuges in eine erste Richtung (43) auf einer Bodenfläche (51) eines Frachtladerraumes mit in die Bodenfläche (51) integrierten Förderbahnen (41,41a) und Antriebseinheiten (47,48), mit in der Bodenfläche (51) überfahrbaren ersten Führungselementen (1), wobei in mindestens eine der Förderbahnen (41,41a) zweite, austauschbare Führungselemente (30) integriert sind, dadurch gekennzeichnet, dass die die zweiten Führungselemente (30) aufnehmende Förderbahn (41,41 a), in welche Kräfte quer zur Längsrichtung (43) des Rumpfes des Luftfahrzeuges einleitbar sind, mit einer der Begrenzungen (56) eines im Heckbereich des Luftfahrzeuges vorgesehenen zusätzlichen Stellflächenbereiches (53) mit Verriegelungselementen (57) derart fluchtet, dass eine Anlagefläche (26) des Führungskörpers (31) die Fortsetzung der Begrenzung (56) bildet.

Der Vorteil der erfindungsgemäß vorgeschlagenen Lösung ist darin zu erblicken, daß eine Umrüstung oder der Normaleinbau zur Ausnutzung des Bulkbereichs eines Frachtladeraumes in einem Luftfahrzeug wesentlich preiswerter und einfacher vorgenommen werden kann, da nur wenige zusätzliche Bauteile erforderlich sind. Da die zweiten Führungselemente in einer Rollenbahn eingelassen werden, die mit einer seitlichen Begrenzung des zusätzlichen Stellflächenbereichs fluchtet, ist der an den zweiten Führungselementen ausgerichtete Frachtgegenstand bzw. Frachtbehälter automatisch ausgerichtet und zum Einführen in einen der Stellplätze des zusätzlichen Stellflächenbereichs im Bulkbereich des Frachtladeraumes bereit. Da zur Ausnutzung bzw. Umrüstung des Bulkbereiches lediglich wenige, weitestgehend standardisierte Bauteile erforderlich sind, geht der Umrüstvorgang bzw. der Ersteinbau schnell und ohne übermäßigen Aufwand vonstatten. Ein weiterer Vorteil ist darin zu erblicken, daß die standardmäßig konfektionierten Standardkugelmatten beibehalten werden können und keine teuren und aufwändigen Sonderkonfektionen dieser Teile zum Auslegen der Bodenfläche erforderlich sind. Schließlich ist ein weiterer Vorteil der erfindungsgemäßen Lösung darin zu erblicken, daß dank der Verwendung nur weniger Bauteile ein erheblicher Gewichtsvorteil im Vergleich zur zusätzlich mitführbaren Nutzlast durch Ausnützung des Bulkbereichs erzielt werden kann.

In Weiterbildung des der Erfindung zugrundeliegenden Lösung sind Führungskörper der zweiten Führungselemente mit Anschlagflächen von Verriegelungselementen einer Begrenzung am zusätzlichen Stellflächenbereich fluchtend aufgenommen, so daß das Einführen des an den zweiten Führungselementen ausgerichteten Frachtgegenstandes bzw. Frachtbehälters in einen Stellplatz im zusätzlichen Stellflächenbereich erheblich erleichtert werden kann und automatisierbar ist. Der zusätzliche, im Bulkbereich ausnutzbare Stellflächenbereich kann einen oder mehrere Stellplätze für Frachtgegenstände oder Frachtbehälter umfassen, so daß dort mehrere Frachtgegenstände bzw. mehrere zusätzliche Frachtbehälter positionierbar sind.

Die ersten Führungselemente, die zweiten Führungselemente sowie die Verriegelungselemente an einer Begrenzung des zusätzlichen Stellflächenbereichs können in einer Ausführungsvariante der erfindungsgemäßen Lösung mit Gleitkörpern versehen werden, die in eine erste Richtung, eine zweite Richtung oder in Z-Richtung (Hochachse des Luftfahrzeuges) wirksam sind. Die Aufnahme zusätzlicher Abriebs- bzw. Gleitkörper an den Führungs- bzw. Verriegelungselementen erlaubt eine Trennung der Funktionalitäten Korrosionsschutz und Gleiteigenschaft durch Verwendung unterschiedlicher Materialien. Durch die erfindungsgemäß vorgeschlagenen Gleitkörper können zusätzlich Rollen an den Verriegelungselementen vermieden werden, die zusätzliches Gewicht verursachen und deren Einbauraum beengt ist Ferner kann mit dieser Lösung der Korrosionsschutz des Bauteiles nicht beschädigt werden, wobei eine einfache Wiederherstellung eines verbrauchten Gleitkörpers durch dessen Auswechselbarkeit am Führungs- bzw. Verriegelungselement gewährleistet ist. Gegenüber dem aus dem Stand der Technik bekannten Lösung, bietet sich mit der erfindungsgemäßen Lösung der Vorteil, daß bei erfolgtem Abrieb an einer Berührungsstelle das komplette Bauteil, d.h. der Führungskörper des Führungselementes nicht komplett zu ersetzen und neu zu beschichten ist, um den Korrosionsschutz wieder herzustellen, sondern daß lediglich der in dem Führungs- bzw. Verriegelungselement aufgenommene auswechselbare Gleit- bzw. Abriebkörper zu ersetzen ist. Teure Bearbeitungsvorgänge lassen sich bei der erfindungsgemäßen Lösung einsparen.

Die Gleitkörper umfassen bevorzugt einen abriebfesten, nicht metallischen Werkstoff und sind bevorzugt in den Führungs- bzw. Verriegelungselementen austauschbar aufgenommen. Der Gleitkörper kann alternativ auch formschlüssig von den Führungselementen bzw. den Verriegelungselementen gehalten werden. In die Führungselemente bzw. die Verriegelungselemente kann der Gleitkörper auch eingeklebt werden. Daneben ist es selbstverständlich auch möglich, den Gleitkörper in die Führungs- bzw. Verriegelungselemente durch Verschraubung, Vernietung oder Verrastung auswechselbar einzulassen.

In vorteilhafter Weise sind die ersten und zweiten Führungselemente mit Rastelementen versehen, mit denen die ersten und zweiten Führungselemente in den Förderbahnen in der Bodenfläche des Frachtladeraumes an beliebigen Stellen arretiert werden können.

Die ersten Führungselemente sind vorzugsweise mit einer die Führung in ihrer eingefahrenen Position festlegenden Verriegelungsvorrichtung versehen, wobei die Verriegelungsvorrichtung manuell oder per Fuß oder elektromagnetisch oder elektromechanisch betätigt werden kann. Zur Aufnahme der sicheren Befestigung der ersten bzw. zweiten Förderelemente in der Bodenfläche des Frachtladeraumes, sind die sich im wesentlichen in X-Richtung im Frachtladeraum in der Bodenfläche erstreckenden Förderbahnen mit Öffnungen, die untereinander einen gleichen Abstand aufweisen, versehen, in welche Rastelemente der ersten und zweiten Führungselemente eingreifen und die ersten bzw. zweiten Führungselemente zur Aufnahme der Ausrichte- bzw. Anschlagkräfte zuverlässig fixieren.

Die zweiten Führungselemente sind bevorzugt mit einem aufstellbaren Führungskörper versehen, der per Federkraft von seiner flachgeklappten Position in eine aufgestellte Position überführbar ist. Mittels eines Entsicherungsstiftes, der manuell oder auf elektromagnetischem oder elektromechanischem Wege betätigbar ist, läßt sich ein aufstellbarer Führungskörper, an dem eine Anlagefläche ausgebildet ist, in eine aufgestellte Position überführen.

Anhand der Zeichnung wird die Erfindung nachstehend detaillierter erläutert.

Es zeigt:
- Figur 1: ein überfahrbares Führungselement in ausgefahrener Stellung,
- Figur 2: die Draufsicht auf ein überfahrbares Führungselement in ausgefahrener Stellung,
- Figur 3: die Draufsicht auf ein aufstellbares Führungselement,
- Figur 4: die Vorderansicht eines aufstellbaren Führungselementes und
- Figur 5: die Bodenfläche eines Frachtladeraumes mit integrierten Förderbahnen, an welchen Antriebseinheiten sowie die erfindungsgemäß vorgeschlagenen ersten und zweiten Führungselemente aufgenommen sind,
- Figur 6: ein Verriegelungselement, welches einer seitlichen Begrenzung des zusätzlichen Stellflächenbereiches zugeordnet ist und in dessen Z-Nase ein Gleitkörper eingelassen ist und
- Figur 7: ein Verriegelungselement in der Draufsicht mit in die Z-Nase eingelassenem Gleitkörper aus abriebfestem Material.

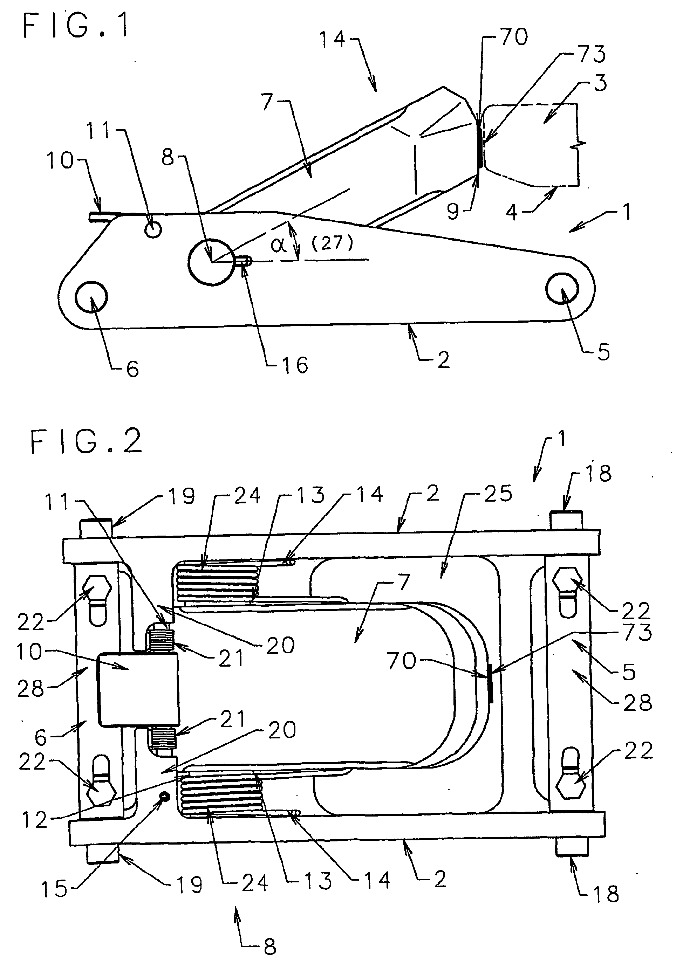

Figur 1 zeigt ein überfahrbares Führungselement in seiner ausgefahrenen Stellung.

Der Darstellung gemäß Figur 1 ist zu entnehmen, daß ein überfahrbares Führungselement 1 ein Aufnahmegehäuse 2 umfaßt, in welchem eine schwenkbare Führung 7 um eine Schwenkachse 8 schwenkbar aufgenommen ist. Im Aufnahmegehäuse 2 verläuft ein erster Haltebolzen 5 sowie ein zweiter Haltebolzen 6, über welche das Aufnahmegehäuse 2 des überfahrbaren Führungselementes 1 an Förderbahnen 44 in der Bodenfläche 51 eines Frachtladeraumes arretierbar ist. Im in Figur 1 dargestellten Zustand ist die schwenkbare Führung 7 mit daran ausgebildeter Führungsfläche 9 in eine ausgefahrene Position 17 gestellt. In dieser Position wird ein Frachtbehälter 3, dessen Unterseite 4 über der Bodenfläche 51 des Frachtladeraumes und der Oberseite des Aufnahmegehäuses 2 liegt, in Position gehalten. In ihrer ausgefahrenen Position 17 nimmt die schwenkbare Führung 7 mit daran ausgebildeter, den Frachtbehälter 3 fixierender Führungsfläche 9 einen Schwenkwinkel 27 ein, in der Darstellung gemäß Figur 1 mit α bezeichnet. Die schwenkbare Führung 7 ist um ihre Schwenkachse 8 schwenkbar, die sich senkrecht zur Zeichenebene durch das Aufnahmegehäuse 2 erstreckt. Mit Bezugszeichen 16 ist ein Spannstift bezeichnet, der ein Drehen der Schwenkachse 8 im Aufnahmegehäuse 2 verhindert.

Im Aufnahmegehäuse 2 des überfahrbaren, ersten Führungselementes 1 ist ferner ein manuell oder per Fuß betätigbarer Verriegelungshebel 10 angeordnet, der seinerseits um eine Hebelachse 11 bewegbar ist. Auch der Verriegelungshebel 10 ist über in Figur 1 nicht dargestellte Federelemente beaufschlagt.

Figur 2 zeigt die Draufsicht auf ein überfahrbares Führungselement in ausgefahrener Position.

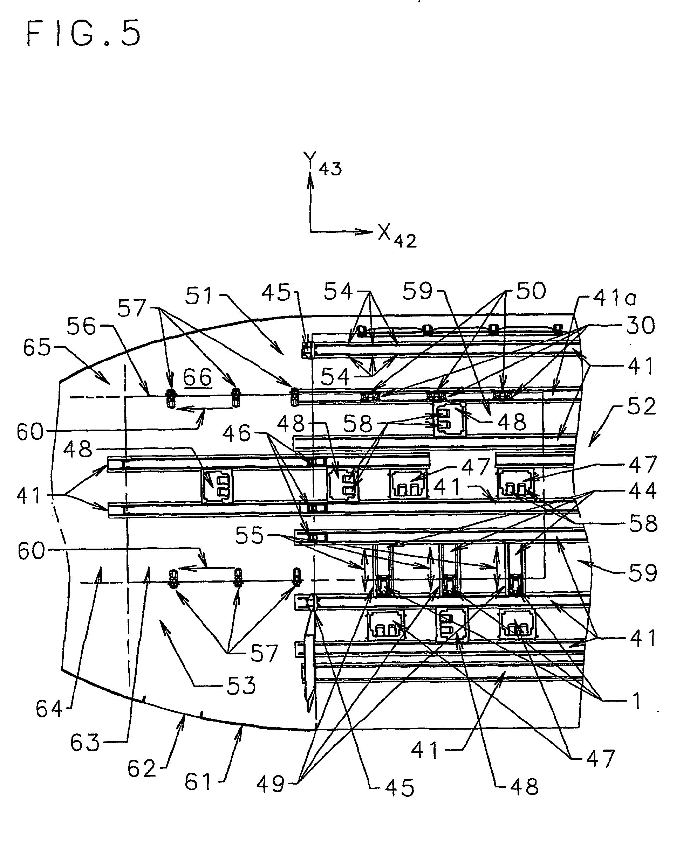

Aus der Darstellung des ersten, überfahrbaren Führungselementes 1 gemäß Figur 2 geht hervor, daß in den Endbereichen des Aufnahmegehäuses 2 ein erster Haltebolzen 5 sowie ein zweiter Haltebolzen 6 angeordnet sind. Die Haltebolzen 5 bzw. 6 bestehen aus Hülsen 28. Die Hülsen 28 sowie die Haltebolzen 5 bzw. 6 sind von Arretierschrauben 22 durchsetzt, mit welchen Bolzenenden 18 bzw. 19 im ersten Haltebolzen 5 bzw. zweiten Haltebolzen 6 aufgenommen werden können. Eine Arretierung des ersten Führungselementes 1 in Öffnungen 54 (vgl. Figur 5) aus Förderbahnen 41, 41a bzw. Förderbahnabschnitten 44 kann durch Lösen der Klemmschrauben schnell vorgenommen werden, so daß eine Anpassung der Positionen der zweiten Führungselemente an variierende Frachtbehältergrößen problemlos möglich ist.

Die Schwenkachse 8, an der die schwenkbare Führung 7 aufgenommen ist, kann von einer Distanzhülse 12 umschlossen sein, die ihrerseits von einer Spiralfeder 13 umschlossen ist. Mittels der Spiralfeder 13 wird der schwenkbare Führungsabschnitt 7 mit einer Vorspannkraft beaufschlagt. Die bügelförmigen Federschenkel 14 der Spiralfeder 13 werden im Aufnahmegehäuse 2 befestigt.

Der Verriegelungshebel 10, aufgenommen an einer Hebelachse 11, ist seinerseits mittels eines Federelementes 21 mit einer Vorspannkraft beaufschlagt und ermöglicht die Arretierung - sei es per Fuß oder per Hand - der schwenkbaren Führung 7 in einer unter der Bodenfläche 51 des Frachtladeraumes eingefahrenen Position. In einem Querholm 20 des Aufnahmegehäuses 2 ist die Hebelachse 11 mittels eines Spannstiftes 15, der sich senkrecht zur Zeichenebene gemäß Figur 2 erstreckt, verdrehsicher aufgenommen. Die Federkraft, welche durch die Spiralfeder 13 aufgebracht wird, hängt von dem gewählten Federmaterial ab und ist abhängig von der Windungsanzahl 24, mit der die Spiralfeder 13 die Distanzhülse 12 der Schwenkachse 8 umgibt.

Das Aufnahmegehäuse 2 des ersten Führungselementes 1 besteht vorzugsweise aus einem bearbeiteten Aluminium; die schwenkbare Führung 7 kann aus rostfreiem Stahl gefertigt sein, während der Verriegelungshebel 10 aus Aluminium gefertigt werden kann. Zum Schutz gegen Korrosion ist das Aufnahmegehäuse 2 mit einer korrosionsbeständigen Beschichtung versehen und anschließend versiegelt. Die Stahlkomponenten, so zum Beispiel die ersten und zweiten Haltebolzen 5 bzw. 6 sowie die schwenkbare Führung 7 sind passivisiert, wobei die Betätigungselemente des ersten Führungselementes 1, d.h. der Verriegelungshebel 10 in einer Kontrastfarbgebung, zum Beispiel rot gehalten sein kann. Die Distanzhülse 12, welche die Schwenkachse 8 des schwenkbaren Führungselementes 7 umgibt, wird bevorzugt aus Bronze gefertigt. Auch die Hebelachse 11 des Verriegelungshebels 10 kann von einer Hülse umschlossen sein, die ebenfalls aus Bronze oder einem anderen metallischen weicheren Material gefertigt sein kann. An der Außenumfangsfläche der in Figur 2 nicht dargestellten, die Hebelachse 11 umgebenden Hülse können die Torsionsfedern 21 aufgenommen werden.

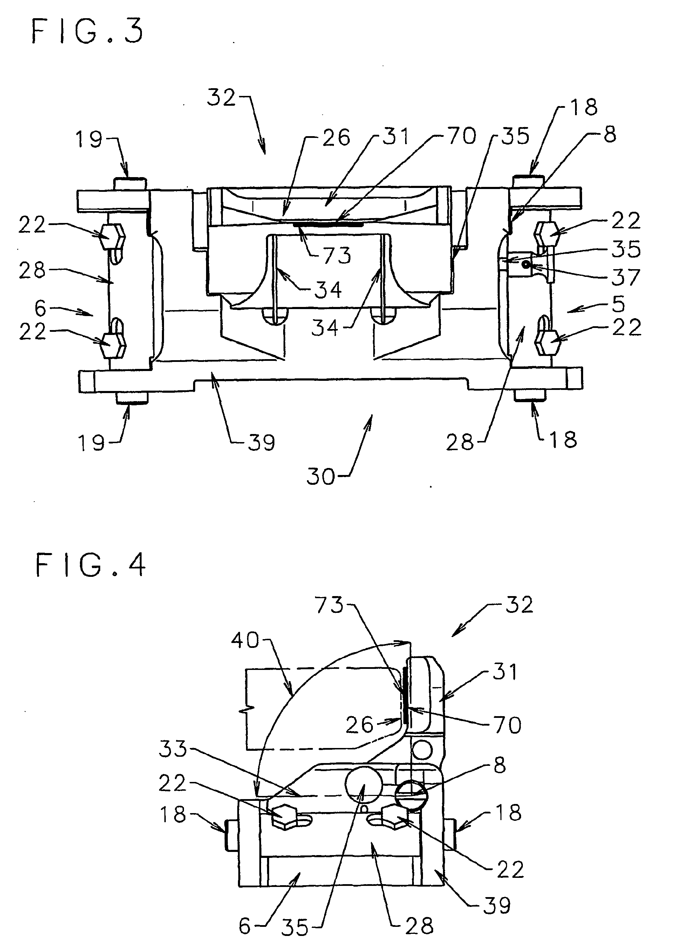

Der Darstellung gemäß Figur 3 ist die Draufsicht auf ein zweites, aufstellbares Führungselement zu entnehmen.

Im Aufnahmegehäuse 39 des zweiten, aufstellbaren Führungselementes 30 sind analog zum Aufnahmegehäuse 2 des ersten, überfahrbaren Führungselementes 1, ein erster Haltebolzen 5 sowie ein zweiter Haltebolzen 6 aufgenommen. An den Haltebolzen 5 bzw. 6 befinden sich aus den Außenflächen des Aufnahmegehäuses 39 hinausragende Bolzenenden 18 bzw. 19. Die Bolzenenden 18 bzw. 19 des ersten Haltebolzens 5 bzw. des zweiten Haltebolzens 6 können mittels Arretierschrauben 22 in ihrer Position fixiert werden; daneben können die Bolzenenden 18 bzw. 19 durch in Haltebolzen 5 bzw. 6 jeweils integrierte Federelemente vorgespannt werden, so daß sie sich werkzeuglos zwischen Förderbahnen 41 in der Bodenfläche eines Frachtladeraumes an beliebigen Montagepositionen arretieren lassen. Die Schwenkachse 8, an der der aufstellbare Führungskörper 31 aufgenommen ist, durchsetzt das Aufnahmegehäuse 39 des zweiten, aufstellbaren Führungselementes 30 in Längsrichtung. In der Darstellung gemäß Figur 5 sind die Enden einer Spiralfeder 34 erkennbar, welche die Schwenkachse 8 des aufstellbaren Führungskörpers 31 umgibt. Der das Aufstellen des Führungskörpers 31 freigebende Entriegelungsstift 35 kann mit einem Griffstück versehen sein, welches mittels eines Spannstiftes 37 an der Achse des Entriegelungsstiftes 35 befestigt ist.

Der Darstellung gemäß Figur 4 ist die Vorderansicht eines zweiten, aufstellbaren Führungselementes zu entnehmen.

Der Aufstellwinkel 40, den der Führungskörper 31 beim Einnehmen seiner ausgefahrenen Position 32 einnimmt, beträgt vorzugsweise 90°. Ein nicht dargestellter Frachtbehälter oder ein sperriger auszurichtender Frachtgegenstand kann an einer Anlagefläche 26 des aufstellbaren Führungskörpers 31 des zweiten, aufstellbaren Führungselementes 30 exakt senkrecht zu den in der Bodenfläche 50 des Frachtladeraumes verlaufenden Förderbahnen 41 ausgerichtet und durch Ansteuerung der entsprechenden Antriebseinheiten in seine Stauposition gefahren werden.

Sowohl die Führungsfläche 9 des ersten, überfahrbaren Überführungselementes 1 als auch die Anlagefläche 26 des Führungskörpers 31 des zweiten Führungselementes 30 können mit einem in die Fläche eingesetzten, austauschbar befestigten Gleit- bzw. Abriebkörper 70 versehen sein. Dieser umfaßt bevorzugt ein abriebfestes, Gleiteigenschaften günstig beeinflussendes Material. Die in die Führungsfläche 9 bzw. die Anlagefläche 26 integrierbaren Gleitkörper 70 können bei Verschleiß leicht ausgewechselt werden, ohne daß eine Komplettüberarbeitung und damit eine Erneuerung des Korrosionsschutzes an der Führungsfläche 9 des ersten Führungselementes 1 bzw. der Anlagefläche 56 am Führungskörper 31 des zweiten Führungselementes 30 erforderlich wäre.

Die Schwenkachse, um welche der aufstellbare Führungskörper 31 in seine aufgestellte Position 32 verfährt, ist mit Bezugszeichen 8 gekennzeichnet. Das Aufstellen des Führungskörpers 31 in seine aufgestellte Position 32 erfolgt nach Betätigung des Entriegelungsstiftes 35. Durch den Entriegelungsstift 35 wird der Führungskörper 31 in seiner flachgeklappten Position 33, d.h. unter der Bodenfläche 51 des Frachtladeraumes gehalten.

Der Darstellung gemäß Figur 5 ist die Bodenfläche eines Frachtladeraumes mit integrierten Förderbahnen, diesen zugeordneten Antriebseinheiten für die Frachtbehälter oder Frachtgegenstände sowie den erfindungsgemäßen angeordneten ersten bzw. zweiten Führungselementen entnehmbar.

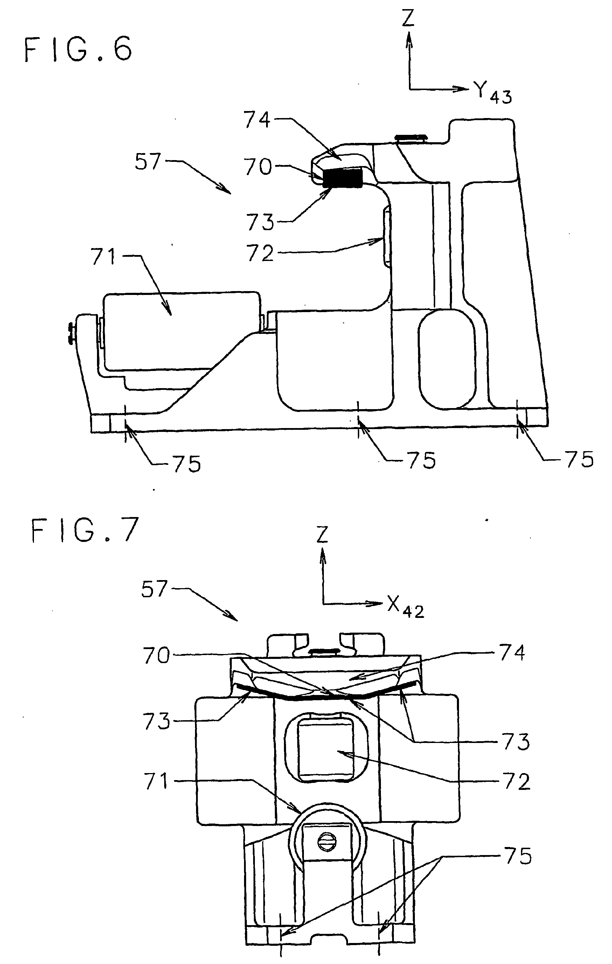

Die Bodenfläche 51 eines Frachtladeraumes eines Luftfahrzeuges umfasst beabstandet voneinander aufgenommene Förderbahnen 41 und einzelne, in der Darstellung gemäss Figur 7 dem Ladetorbereich zuweisende Förderbahnabschnitte 44, die senkrecht zu den Förderbahnen 41 in der Bodenfläche 51 des Frachtladeraumes orientiert sind. Einzelne der sich parallel zur Längsrichtung 42 (X-Richtung) des Frachtladeraumes erstreckende Förderbahnen 41 sind mit Endanschlägen 45 versehen.

Die Bodenfläche 51 des Frachtladeraumes ist in einen sich im wesentlichen in die zweite Richtung 42 erstreckenden Stellflächenbereich 52 und einen zusätzlichen Stellflächenbereich 53 unterteilt, der dem Heckbereich eines Luftfahrzeuges zuweist. Im Stellflächenbereich 52 können Frachtbehälter 3, die sich über die gesamte Breite des Laderaumes in Y-Richtung 43 erstrecken, in X-Richtung 42, d.h. in die zweite Richtung hintereinander stehend aufgenommen und an ihren Stellplätzen im Stellflächenbereich 52 arretiert und verriegelt werden. Im Ladetorbereich des Stellflächenbereichs 52 sind zwischen den voneinander beabstandeten Förderbahnen 41 Antriebselemente 47 bzw. 48 eingelassen. Jedes dieser Antriebselemente, die vorzugsweise einen elektrischen Antrieb umfassen, enthält ein oder mehrere angetriebene Rollen oder scheibenförmige Antriebselemente 58. Die mit Bezugszeichen 47 bezeichneten Antriebselemente umfassen angetriebene Rollen 48, mit denen Frachtbehälter 3 an ihrer Unterseite 4 reibschlüssig in Y-Richtung 43 in den Frachtladeraum gefördert werden können; die mit Positionszeichen 48 bezeichneten Antriebselemente umfassen angetriebene Rollen oder scheibenförmige Körper 58, mit denen die an der Unterseite 4 reibschlüssig ergriffenen Frachtbehälter oder Frachtgegenstände in X-Richtung 42 im Frachtladeraum verfahren werden können. Zwischen dem Stellbereich 52 der Bodenfläche 51 und dem zusätzlichen Stellflächenbereich 53 (Bulk) sind eine Anzahl von abklappbaren Verriegelungselementen 46 aufgenommen, die aus einer abgeklappten, d.h. in die Bodenfläche 51 eintauchenden Position in eine aus dieser ausgefahrenen Position verstellt werden können. Im Ladetorbereich des Stellflächenbereiches 52 der Bodenfläche 51 des Frachtladeraumes sind zwischen den Förderbahnen 41 eine Anzahl in Querrichtung orientierte Förderbahnabschnitte 44 eingelassen. In den sich in Y-Richtung 43 (1. Richtung) erstreckenden Förderbahnabschnitten 44 sind an Montagepositionen 49 jeweils erste überfahrbare Führungselemente 1 angeordnet. Je nach Öffnungsmuster, welches an den Stegen der Förderbahnabschnitte 44 ausgebildet ist, lassen sich die überfahrbaren, ersten Führungselemente 1 innerhalb eines Positionierungsbereiches 55 an den Förderbahnabschnitten 44 in den an diesen ausgebildeten Lochmustern entsprechenden Positionen arretieren. Dadurch kann eine Anpassung an unterschiedliche Bodenflächen von auszurichtenden und in Stellplätze einzuführende Frachtbehälter 3 erreicht werden.

In einer der den Frachtladeraum durchziehenden, sich in X-Richtung 42 (2. Richtung) erstreckenden Förderbahnen 41 sind an Montagepositionen 50 die zweiten, aufstellbaren Führungselemente 30 aufgenommen. Die im aufgeklappten Zustand als Anschlagelemente für die in Y-Richtung 43 im Frachtladeraum zu positionierenden und in X-Richtung 42 auszurichtenden Frachtbehälter 3 fungierenden zweiten aufstellbaren Führungselemente 30 zeichnen sich dadurch aus, dass die Krafteinleitungsrichtung durch Anschlag der Frachtbehälter 3 an den aufgestellten Flächen der zweiten Führungselemente 30 und die Montagerichtung der die zweiten aufstellbaren Führungselemente 30 in sich aufnehmende Förderbahn 41a im Frachtladeraum senkrecht aufeinander stehen. Vorzugsweise fluchtet diejenige der Förderbahnen 41a, die die in Montagepositionen 50 aufgenommenen zweiten aufstellbaren Führungselemente 30 enthält, derart mit einer Begrenzung 56 eines zusätzlichen Stellbereiches 53, der sich an den genannten Stellbereich 52 der Bodenfläche 51 des Frachtladeraumes eines Luftfahrzeuges anschließt, dass die Anlagefläche 26 des Führungskörpers 31 die Fortsetzung der Begrenzung 56 bildet. Zur Positionierung der in die Förderbahn 41 an den Montagepositionen 50 eingelassenen zweiten Führungselemente 30 sind die seitlichen, die Förderbahnen 41 jeweils begrenzenden Stege mit einem Öffnungsmuster 54 versehen, welches vorzugsweise als ein Lochmuster beschaffen ist. In die Öffnungen gemäß des Lochmusters 54 in den seitlichen Stegen der Förderbahnen 41 greifen die an den Montagepositionen 50 bzw. 49 in Bezug auf die Förderbahnabschnitte 44 jeweils zu montierenden ersten überfahrbaren Führungselemente 1 oder die zweiten aufstellbaren Führungselemente 30 mit über Klemmschrauben ausfahrbaren Arretierungsbolzen ein.

Aus der Darstellung gemäß Figur 5 geht hervor, dass einem ersten Stellplatz 63 einer zusätzlichen Stellfläche 53 im Heckbereich eines Luftfahrzeuges entlang der Begrenzung 56, die mit einer Förderbahn 41 fluchtend verläuft, eine Anzahl von Verriegelungselementen 57 zugeordnet ist. Die Verriegelungselemente 57 finden sich auch auf der der Begrenzung 56 gegenüberliegenden Begrenzung des ersten Stellplatzes 63 an der zusätzlichen Stellfläche 53 im Frachtladeraum wieder. Die zusätzliche Stellfläche 53 der Bodenfläche 51 des Frachtladeraumes im Heckbereich eines Luftfahrzeuges kann mehrere Stellplätze enthalten. Neben dem in Figur 7 dargestellten ersten Stellplatz 63 können weitere Stellplätze 64, 65 bzw. 66 vorgesehen sein, in welchen erfindungsgemäß ausgerichtete und im Frachtladeraum zu den jeweiligen Stellplätzen 63, 64, 65, 66 zur Erleichterung einer reibungslosen Einführung positionierte Frachtbehälter 3 eingeführt werden können. Die Frachtbehälter können in Einführrichtung 60 gesehen entweder hintereinanderstehend oder nebeneinanderstehend auf den Stellplätzen 63, 64, 65, 66 des zusätzlichen Stellflächenbereiches 53 des Frachtladeraumes aufgenommen werden.

Der Bereich zwischen den voneinander beabstandeten Förderbahnen 41 im Stellflächenbereich 52, der mit Bezugszeichen 59 bezeichnet ist, wird mit entsprechend konfektionierten Kugelmattenabschnitten ausgelegt, so dass die im Frachtladeraum zu positionierenden Frachtbehälter oder Frachtgegenstände 3 ihr Gewicht gleichmäßig auf der Bodenfläche 51 des Frachtladeraumes verteilen. Auch der Bereich zwischen den Förderbahnen 41, zwischen welchen sich die in Querrichtung orientierten Förderbahnabschnitte 44 erstrecken, wird durch entsprechend konfektionierte Kugelmattenbereiche ausgelegt, um eine gleichmäßige Gewichtsverteilung der zu positionierenden und in ihre Stellplätze zu fördernden Frachtbehälter 3 oder Frachtgegenstände zu gewährleisten.

Mit Positionszeichen 61 ist der Verlauf der Außenwandung eines Luftfahrzeuges im Heckbereich angedeutet, welcher optional eine zusätzliche Ladeöffnung 62 enthalten kann.

Wird ein Frachtbehälter 3 in Y-Richtung 43 (d.h. 1. Richtung) auf der Bodenfläche 51 des Frachtladeraumes bewegt, so werden die schwenkbaren Führungsflächen 7 der ersten überfahrbaren Führungselemente 1 durch das Gewicht des Frachtbehälters 3 in ihre eingefahrene Position gedrückt. Sie verbleiben aufgrund des Gewichtes des auf der Bodenfläche 51 geförderten Frachtbehälters 3 so lange in ihrer eingefahrenen Position, bis der Frachtbehälter 3 an einem oder mehreren der zweiten aufstellbaren Führungselemente 30 anschlägt. Sobald die Unterseite 4 des Frachtbehälters 3 die ersten überfahrbaren Führungselemente 1 überfahren hat, schnellen die schwenkbaren Führungen 7 aufgrund der Wirkung der Spiralfeder 13 nach oben und sichern den Frachtbehälter 3 in seiner ausgerichteten Position. In dieser ausgerichteten Position fluchtet die Förderbahn 41, in welcher die aufstellbaren Führungselemente 30 in ihren Montagepositionen 50 eingelassen sind, mit einer Begrenzung 56 eines ersten Stellplatzes im zusätzlichen Stellbereich 63 im Heckbereich des Luftfahrzeuges. Durch die Anordnung der ersten, überfahrbaren Führungselemente 1 in den sich in Querrichtung erstreckenden Förderbahnabschnitten 44 in definierten Montagepositionen 49 aufgenommenen ersten, überfahrbaren Führungselemente 1 ist sichergestellt, dass der Frachtbehälter exakt in Y-Richtung 43 in Bezug auf den ersten Stellplatz 63 des zusätzlichen Stellbereiches 53 positioniert ist. Mittels der in X-Richtung 42 wirkenden Antriebselemente 48 lässt sich der ausgerichtete Frachtbehälter 3 in Einführrichtung 60 auf den ersten Stellplatz 63 bewegen. Seitlich wird der im zusätzlichen Stellbereich 53 aufzunehmende Frachtbehälter 3 durch Verriegelungselemente 57 in Y-Richtung und in Z-Richtung gesichert, während die erwähnten Verriegelungshebel 46 manuell oder automatisch in ihre aufgestellte Position gefahren werden und den auf dem ersten Stellplatz 63 eingefahrenen Frachtbehälter 3 in X-Richtung 42 und in Z-Richtung sichern. Analog kann verfahren werden, wenn auf die weiteren Stellplätze 64, 65, 66 weitere Frachtbehälter 3 oder Frachtgegenstände im zusätzlichen Stellbereich 53 der Bodenfläche 51 des Frachtladeraumes eines Luftfahrzeuges hintereinander stehend oder nebeneinander in Reihe stehend aufgenommen werden sollen. Werden Frachtbehälter 3 auf den ersten Stellplatz 63 und die weiteren Stellplätze 64, 65 und 66 des zusätzlichen Stellbereiches 53 positioniert, sind die Förderbahnen 41 entsprechend zu verlängern sowie weitere, in X-Richtung 42 wirkende Antriebseinheiten 48 vorzusehen.

Mit dem erfindungsgemäß vorgeschlagenen Verfahren ist sichergestellt, dass vor Einführung in Einführrichtung 60 von Frachtbehältern 3 auf im zusätzlichen Stellbereich 53 vorgesehene Stellplätze 63, 64, 65 und 66 die Frachtbehälter 3 in Y-Richtung 43 korrekt positioniert sind und ein reibungsloses Einführen des Frachtbehälters 3 auf seinen entsprechenden Stellplatz erfolgen kann. Die variable Positionierbarkeit der ersten, überfahrbaren Führungselemente 1 an ihren sich in Querrichtung des Frachtladeraumes erstreckenden Förderbahnabschnitten 44 erlaubt eine Anpassung der Ausrichtungsposition an unterschiedliche Frachtbehältergrößen.

Figur 6 zeigt ein Verriegelungselement 57, welches zum Beispiel an einer mit einer Rollenbahn 41a fluchtenden seitlichen Begrenzung 56 des zusätzlichen Stellflächenbereiches 52 montiert sein kann.

Das Verriegelungselement 57 umfaßt in seinem Fußbereich Öffnungen 75, mit welchen es unter Verwendung von Bolzen oder Schrauben im Boden des Bulkbereichs, d.h. des zusätzlichen Stellflächenbereiches 53 fixierbar ist. Das Verriegelungselement 57 weist ferner in horizontale Richtung orientierte Rollenkörper 71 und senkrecht zu diesen angeordnete vertikal orientierte Rollenkörper 72 auf, welche ein leichtes Einführen der zusätzlichen Frachtgegenstände bzw. der Frachtbehälter 3 in Richtung der in die Zeichenebene verlaufenden X-Richtung (d.h. in die erste Richtung 42) gestatten. Daneben ist am Verriegelungselement 57 ein nasenförmiger, übergreifender Vorsprung 74 (Z-Nase) ausgebildet, mit welchem die Frachtbehälter bzw. Frachtgegenstände in die eingezeichnete Z-Richtung während des Fluges gesichert sind. An der Unterseite der Z-Nase 74 sind Gleitkörper 70 eingelassen, deren Kontaktfläche 73 erhaben über die Begrenzung der Z-Nase ragt. Der hier in der Unterseite des übergreifenden Vorsprungs 74 (Z-Nase) angeordnete Gleitkörper 70 besteht vorzugsweise aus einem nicht metallischen, abriebfesten Material und kann zum Beispiel in der Unterseite der Z-Nase 74 austauschbar aufgenommen sein. Der Gleitkörper 70 kann einerseits an der Unterseite des übergreifenden Vorsprungs 74 (Z-Nase) eingeklebt sein; er kann auch durch Verspannen befestigt werden. Neben einer Verspannung und einem Einkleben des Gleitkörpers 70 in den übergreifenden Vorsprung 74 (Z-Nase) des Verriegelungselementes 57 kann der Gleitkörper 70 auch in diesem verschraubt, vernietet bzw. an dem übergreifenden Vorsprung 74 (Z-Nase) verrastet werden.

Aus der Darstellung gemäß Figur 7 geht die Draufsicht auf ein Verriegelungselement 57 hervor.

Aus der Draufsicht gemäß Figur 7 geht hervor, daß die Kontaktfläche 73 des Gleitkörpers 70, eingelassen in den übergreifenden Vorsprung 74 (-Nase), erhaben über dessen Unterseite hervorsteht. Der hier nicht dargestellte Frachtbehälter 3 bzw. der zu verstauende Frachtgegenstand bzw. Frachtbehälter 3 läuft in X-Richtung (Bezugszeichen 42) auf den horizontal orientierten Körpern 71. Die in Y-Richtung (Bezugszeichen 43) wirksame Anschlagfläche wird durch einen vertikal orientierten Rollenkörper 72 gebildet, während die Verriegelung des Frachtgegenstandes gegen ein Verrutschen oder ein Abheben von der Bodenfläche in Z-Richtung gesehen durch den im Frachtbehälterboden oder eine Palette übergreifenden Vorsprung 74 (Z-Nase) realisiert wird.

Die Integration eines Gleitkörpers 70 aus abriebfestem, nicht metallischen Material reduziert das Gewicht am Verriegelungselement 57 gegenüber dem Einsatz von Rollen. Ferner wird durch eine Integration des Gleitkörpers 70 in den nasenförmigen Vorsprung 74 der Korrosionsschutz des Verriegelungselementes 57 nicht beschädigt. Ferner läßt sich der Gleitkörper 70 leicht austauschen und durch einen Neuen mit unverbrauchten Gleiteigenschaften ersetzen. Die funktionale Trennung durch die Verlagerung der Gleiteigenschaften auf einen Gleitkörper 70 und die Verlagerung der Führungseigenschaften auf die rollenförmigen Elemente 71 bzw. 72, erlaubt ein Auswechseln der jeweiligen, die Funktion erfüllenden Komponente bei deren Verschleiß und vermeidet das Ersetzen eines kompletten Verriegelungselementes 57 bei lediglich verbrauchtem Material bzw. Funktionseigenschaften eines der aufgezählten Elemente.

### Bezugszeichenliste

- 1: erstes überfahrbares Führungselement
- 2: Aufnahmegehäuse
- 3: Frachtbehälter
- 4: Frachtbehälter Unterseite
- 5: erster Haltebolzen
- 6: zweiter Haltebolzen
- 7: schwenkbare Führung
- 8: Schwenkachse
- 9: Führungsfläche
- 10: Verriegelungshebel

- 11: Hebelachse
- 12: Distanzhülse
- 13: Spiralfederelement
- 14: Federschenkel
- 15: Spannstift (vertikal)
- 16: Spannstift (horizontal)
- 17: ausgefahrene Position
- 18: Bolzenende
- 19: Bolzenende
- 20: Querholm
- 21: Spiralfedervorsprung Verriegelungshebel
- 22: Arretierungsschraube
- 23: Spiralfederwiderlager
- 24: Windung
- 25: Öffnung
- 26: Anlagefläche
- 27: Schwenkwinkel α
- 28: Hülse

- 30: zweites, aufstellbares Führungselement
- 31: Führungskörper
- 32: aufgestellte Position
- 33: flachgeklappte Position
- 34: Spiralfeder
- 35: Entriegelungsstift
- 36: Spannstift
- 37: Stift
- 38: Stift
- 39: Aufnahmegehäuse
- 40: Anstellwinkel
- 41: Förderbahn
- 42: X-Richtung (Führungsrichtung)
- 43: Y-Richtung
(Positionierungsrichtung)
- 44: Förderbahnabschnitte in
Querrichtung
- 45: Endanschlag Förderbahn
- 46: Verriegelungshebel
- 47: Antriebselement Y-Richtung
- 48: Antriebselement X-Richtung
- 49: Montageposition überfahres Führungselement 1
- 50: Montageposition aufstellbares Führungselement 30
- 51: Bodenfläche
- 52: Stellflächenbereich
- 53: zusätzlicher Stellflächenbereich
- 54: Öffnungsmuster Förderbahn
- 55: Positionierungsbereich FE 1
- 56: fluchtende Begrenzung zusätzlicher Stellplatz
- 57: Y, Z-Verriegelungselement
- 58: angetriebene Rollen
- 59: Verlegebereich Kugelmatten
- 60: Einführrichtung
- 61: Bordwandung
- 62: Ladeöffnung
- 63: erster Stellplatz
- 64,65,66: weitere Stellplätze
- 70: Gleitkörper
- 71: horizontaler Rollenkörper
- 72: vertikaler Rollenkörper
- 73: Kontaktfläche
- 74: übergreifender Vorsprung
- 75: Befestigungsöffnung

## Patentansprüche

1. Verfahren zum Positionieren von Frachtgegenständen oder Frachtbehältern (3) auf einer Bodenfläche (51) eines Frachtladeraumes eines Luftfahrzeuges mit in die Bodenfläche (51) integrierten Förderbahnen (41, 41a) und in die Bodenfläche (51) eingelassenen Antriebseinheiten (47, 48), wobei ein oder mehrere Frachtbehälter (3) den Förderbahnen (41) zugeordnete erste Gleitkörper (70) aufnehmende Führungselemente (1) in eine erste Richtung (43) oder eine zweite Richtung (42) überfahren und an zweiten, Gleitkörper (70) enthaltenden Führungselementen (30) in die erste oder zweite Richtung (43, 42) zwischen den ersten Führungselementen (1) und den zweiten Führungselementen (30) ausgerichtet werden, **dadurch gekennzeichnet, dass** die Frachtbehälter (3) in einen oder mehrere Stellplätze (64, 63, 65, 66) eines im Heckbereich des Luftfahrzeuges vorgesehenen zusätzlichen Stellflächenbereiches (53) in die zweite Richtung (42) oder entgegengesetzt dazu geführt werden, wobei die die zweiten Führungselemente (30) innerhalb von Positionierungsbereichen (50, 55) aufnehmende Förderbahn (41a), in welche beim Positionieren der Frachtbehälter (3) in quer zur Längsrichtung (43) des Rumpfes des Luftfahrzeuges auftretende Kräfte eingeleitet werden, derart zu einer Begrenzung (56) mit Verriegelungselementen (57) des zusätzlichen Stellflächenbereiches (53) fluchtet, dass eine Anlagefläche (26) eines Führungskörpers (31) die Fortsetzung der Begrenzung (56) bildet.

2. Verfahren gemäß Anspruch 1, **dadurch gekennzeichnet, dass** die über die Frachtgegenstände oder Frachtbehälter (3) beim Positionieren in die Führungskörper (31) der zweiten Führungselemente (30) eingeleiteten Kräfte quer zur Längsrichtung der Förderbahn (41a) oder anderer Förderbahnen (41) in die Förderbahn (41, 41a)eingeleitet werden.

3. Verfahren gemäß Anspruch 1, **dadurch gekennzeichnet, dass** die Frachtgegenstände oder Frachtbehälter (3) an einer ebenen Unterseite (4) durch in die Bodenfläche (51) integrierte, in beide Drehrichtungen schaltbare Antriebseinheiten (47, 48) in die erste Richtung (43) und/oder in die zweite Richtung (42) verfahrbar sind.

4. Verfahren gemäß Anspruch 3, **dadurch gekennzeichnet, dass** die Antriebseinheiten (47, 48) in der Bodenfläche (51) in die erste Richtung (43) oder die zweite Richtung (42) wirkend orientiert sind.

5. Verfahren gemäß Anspruch 1, **dadurch gekennzeichnet, dass** die ersten Führungselemente (1) während der Passage eines Frachtgegenstandes oder eines Frachtbehälters (3) eine eingefahrene Position einnehmen und nach Passage der Unterseite (4) des Frachtgegenstandes oder des Frachtbehälters (3) in eine ausgefahrene Position (17) schnellen.

6. Verfahren gemäß Anspruch 1, **dadurch gekennzeichnet, dass** die Frachtbehälter (3) nach Ausrichtung in der ersten Richtung (43) in Stellplätze (64, 63; 65, 66) hintereinander oder in Stellplätze (64, 65; 63, 66) des zusätzlichen Stellbereiches (53) eingeführt werden.

7. Luftfahrzeug mit einer Vorrichtung zum Positionieren von Frachtgegenständen oder Frachtbehältern (3) innerhalb des Luftfahrzeuges in eine erste Richtung (43) auf einer Bodenfläche (51) eines Frachtladeraumes mit in die Bodenfläche (51) integrierten Förderbahnen (41, 41a) und Antriebseinheiten (47, 48), mit in der Bodenfläche (51) überfahrbaren ersten Führungselementen (1) wobei in mindestens eine der Förderbahnen (41, 41a) zweite, austauschbare Führungselemente (30) integriert sind, **dadurch gekennzeichnet, dass** die die zweiten Führungselemente (30) aufnehmende Förderbahn (41, 41a), in welche Kräfte quer zur Längsrichtung (43) des Rumpfes des Luftfahrzeuges einleitbar sind, mit einer der Begrenzungen (56) eines im Heckbereich des Luftfahrzeuges vorgesehenen zusätzlichen Stellflächenbereiches (53) mit Verriegelungselementen (57) derart fluchtet, dass eine Anlagefläche (26) des Führungskörpers (31) die Fortsetzung der Begrenzung (56) bildet.

8. Luftfhahrzeug gemäß Anspruch 7, **dadurch gekennzeichnet, dass** Führungskörper (31) der zweiten Führungselemente (30) mit Anschlagflächen (72) der Verriegelungselemente (57) der Begrenzung (56) eines zusätzlichen Stellflächenbereiches (53) der Bodenfläche (51) fluchten.

9. Luftfahrzeug gemäß Anspruch 7, **dadurch gekennzeichnet, dass** der zusätzliche Stellflächenbereich (53) einen oder mehrere Stellplätze (63; 64, 65, 66) zur Aufnahme von Frachtgegenständen oder Frachtbehältern (3) umfasst.

10. Luftfahrzeug gemäß Anspruch 7, **dadurch gekennzeichnet, dass** die ersten Führungselemente (1), die zweiten Führungselemente (30) sowie die Verriegelungselemente (57) mit Gleitkörpern (70) versehen sind, die in eine erste Richtung (43) und/oder eine zweite Richtung (42) und/oder in Z-Richtung wirksam sind.

11. Luftfahrzeug gemäß Anspruch 10, **dadurch gekennzeichnet, dass** die Gleitkörper (70) einen abriebfesten, nicht metallischen Werkstoff umfassen.

12. Luftfahrzeug gemäß Anspruch 10, **dadurch gekennzeichnet, dass** der Gleitkörper (70) in den Führungselementen (1, 30) bzw. den Verriegelungselementen (57) austauschbar aufgenommen ist.

13. Luftfahrzeug gemäß Anspruch 10, **dadurch gekennzeichnet, dass** der Gleitkörper (70) formschlüssig von den Führungselementen (1, 30) bzw. den Verriegelungselementen (57) gehalten wird.

14. Luftfahrzeug gemäß Anspruch 10, **dadurch gekennzeichnet, dass** der Gleitkörper (70) in die Führungselemente (1, 30) bzw. die Verriegelungselemente (57) eingeklebt ist.

15. Luftfahrzeug gemäß Anspruch 10, **dadurch gekennzeichnet, dass** der Gleitkörper (70) durch Verspannung der Führungselemente (1, 30) bzw. der Verriegelungselemente (57) in diesen gehalten ist.

16. Luftfahrzeug gemäß Anspruch 10, **dadurch gekennzeichnet, dass** der Gleitkörper (70) an den Führungselementen (1, 30) bzw. den Verriegelungselementen (57) durch Verschraubung, Vernietung oder Verrastung aufgenommen ist.

17. Luftfahrzeug gemäß Anspruch 7, **dadurch gekennzeichnet, dass** die ersten Führungselemente (1) mit einer die schwenkbare Führung (7, 9) in einer in die Bodenfläche (51) eintauchenden Position festlegenden Verriegelungsvorrichtung (10, 11) versehen sind.

18. Luftfahrzeug gemäß Anspruch 17, **dadurch gekennzeichnet, dass** die Verriegelungsvorrichtung (10, 11) manuell, elektromechanisch oder per Fuß zu lösen ist.

19. Luftfahrzeug gemäß Anspruch 7, **dadurch gekennzeichnet, dass** die Förderbahnen (41, 41a) und Förderbahnabschnitte (44) mit Öffnungen (54) versehen sind, in welche Befestigungselemente der ersten und zweiten Führungselemente (1, 30) eingreifen.

20. Luftfahrzeug gemäß Anspruch 7, **dadurch gekennzeichnet, dass** die zweiten Führungselemente (30) mit dem aufstellbaren Führungskörper (31) manuell, per Fuß oder elektromechanisch von ihrer flachgelegten Position (33) in eine aufgestellte Position (32) überführbar sind.

21. Luftfahrzeug gemäß Anspruch 7, **dadurch gekennzeichnet, dass** die zweiten Führungselemente (30) einen Entriegelungsstift (35) umfassen, nach dessen Betätigung der Führungskörper (31) in seine aufgestellte Position (32) schnellt.

22. Luftfahrzeug gemäß Anspruch 7, **dadurch gekennzeichnet, dass** Aufnahmegehäuse (2, 39) der ersten und/oder der zweiten Führungselemente (1, 30) Haltebolzen (5, 6) umfassen, deren Bolzenenden (18, 19) über integrierte Vorspannelemente zur Arretierung in den Förderbahnen (41, 41a, 44) beaufschlagt sind.

## Claims

1. Method of positioning items of freight or freight containers (3) on a floor surface (51) of a hold of an aircraft having conveyor tracks (41, 41a) integrated in the floor surface (51) and drive units (47, 48) incorporated in the floor surface (51), wherein one or more freight containers (3) pass over guide elements (1) accommodating first sliding bodies (70) assigned to the conveyor tracks (41) in a first direction (43) or a second direction (42) and are aligned, on second guide elements (30) containing sliding bodies (70), in the first or second direction (43, 42) between the first guide elements (1) and the second guide elements (30), **characterized in that** the freight containers (3) are guided into one or more storage spaces (64, 63, 65, 66) of an additional storage area region (53) provided in the tail region of the aircraft, in the second direction (42) or in the direction opposite thereto, the conveyor track (41a) which accommodates the second guide elements (30) within positioning regions (50, 55) and into which forces occurring transversely to the longitudinal direction (43) of the fuselage of the aircraft during the positioning of the freight containers (3) are introduced being aligned with respect to a demarcation (56) with locking elements (57) of the additional storage area region (53), in such a way that a contact surface (26) of a guide body (31) forms the continuation of the demarcation (56).

2. Method according to Claim 1, **characterized in that** the forces introduced into the guide bodies (31) of the second guide elements (30) via the items of freight or freight containers (3) during positioning are introduced into the conveyor track (41, 41a) transversely to the longitudinal direction of the conveyor track (41a) or other conveyor tracks (41).

3. Method according to Claim 1, **characterized in that** the items of freight or freight containers (3) can be moved on a flat underside (4), in the first direction (43) and/or in the second direction (42), by drive units (47, 48) which are integrated in the floor surface (51) and can be switched in both directions of rotation.

4. Method according to Claim 3, **characterized in that** the drive units (47, 48) in the floor surface (51) are oriented so as to act in the first direction (43) or in the second direction (42).

5. Method according to Claim 1, **characterized in that** the first guide elements (1) assume a retracted position during the passage of an item of freight or a freight container (3) and, after the underside (4) of the item of freight or freight container (3) has passed, spring back into an extended position (17).

6. Method according to Claim 1, **characterized in that**, following alignment in the first direction (43), the freight containers (3) are introduced into storage spaces (64, 63; 65, 66) one behind the other or into storage spaces (64, 65; 63, 66) of the additional storage region (53).

7. Aircraft comprising a device for positioning items of freight or freight containers (3) within the aircraft in a first direction (43) on a floor surface (51) of a hold having conveyor tracks (41, 41a) and drive units (47, 48) integrated in the floor surface (51), having first guide elements (1) which can be passed over in the floor surface (51), wherein second, replaceable guide elements (30) are integrated in at least one of the conveyor tracks (41, 41a), **characterized in that** the conveyor track (41, 41a) which accommodates the second guide elements (30) and into which forces can be introduced transversely to the longitudinal direction (43) of the fuselage of the aircraft is aligned with one of the demarcations (56) of an additional storage area region (53) provided in the tail region of the aircraft with locking elements (57), in such a way that a contact surface (26) of the guide body (31) forms the continuation of the demarcation (56).

8. Aircraft according to Claim 7, **characterized in that** guide bodies (31) of the second guide elements (30) are aligned with stop surfaces (72) of the locking elements (57) of the demarcation (56) of an additional storage area region (53) of the floor surface (51).

9. Aircraft according to Claim 7, **characterized in that** the additional storage area region (53) comprises one or more storage spaces (63; 64, 65, 66) to accommodate items of freight or freight containers (3).

10. Aircraft according to Claim 7, **characterized in that** the first guide elements (1), the second guide elements (30) and the locking elements (57) are provided with sliding bodies (70) which are effective in a first direction (43) and/or a second direction (42) and/or in the Z direction.

11. Aircraft according to Claim 10, **characterized in that** the sliding bodies (70) comprise an abrasion-resistant, non-metallic material.

12. Aircraft according to Claim 10, **characterized in that** the sliding body (70) in the guide elements (1, 30) or the locking elements (57) is held such that it can be replaced.

13. Aircraft according to Claim 10, **characterized in that** the sliding body (70) is held by the guide elements (1, 30) or the locking elements (57) in a form-fitting manner.

14. Aircraft according to Claim 10, **characterized in that** the sliding body (70) is adhesively bonded into the guide elements (1, 30) or the locking elements (57).

15. Aircraft according to Claim 10, **characterized in that** the sliding body (70) is held in the guide elements (1, 30) or the locking elements (57) by clamping said elements.

16. Aircraft according to Claim 10, **characterized in that** the sliding body (70) is held on the guide elements (1, 30) or the locking elements (57) by screwing, riveting or latching.

17. Aircraft according to Claim 7, **characterized in that** the first guide elements (1) are provided with a locking device (10, 11) which fixes the pivotable guide (7, 9) in a position dipping into the floor surface (51).

18. Aircraft according to Claim 17, **characterized in that** the locking device (10, 11) has to be released manually, electromechanically or by foot.

19. Aircraft according to Claim 7, **characterized in that** the conveyor tracks (41, 41a) and conveyor track sections (44) are provided with openings (54), in which fastening elements of the first and second guide elements (1, 30) engage.

20. Aircraft according to Claim 7, **characterized in that** the second guide elements (30) having the erectable guide body (31) can be transferred from their laid-flat position (33) into an erected position (32) manually, by foot or electromechanically.

21. Aircraft according to Claim 7, **characterized in that** the second guide elements (30) comprise an unlocking pin (35), following actuation of which the guide body (31) springs back into its erected position (32).

22. Aircraft according to Claim 7, **characterized in that** accommodating housings (2, 39) of the first and/or the second guide elements (1, 30) comprise retaining bolts (5, 6), the bolt ends (18, 19) of which are acted on by integrated pre-stressing elements in order to lock them in the conveyor tracks (41, 41a, 44).

## Revendications

1. Procédé de positionnement d'objets de fret ou de récipients de fret (3) sur une face de sol (51) d'un espace de chargement de fret d'un véhicule aérien ,avec des pistes de transport (41,41a) intégrées dans la surface de sol (51) et des unités d'entraînement (47,48) incorporées dans la surface de sol (51), sachant qu'un ou plusieurs récipients de fret (3) passent dans une première direction (43) ou une deuxième direction (42) des éléments de guidage (1) associés aux pistes de transport (41) et supportant des premiers corps de glissement (70), et sont orientés sur des éléments de guidage (30) contenant des deuxième corps de glissement (70) en la première ou la deuxième direction (43,42) entre les premier éléments de guidage (1) et les deuxième éléments de guidage (30), **caractérisé en ce que** les récipients de fret (3), en un ou plusieurs emplacements de réglages (64,63,65,66) d'une zone de surface de réglage (53) supplémentaire, prévue dans la zone arrière du véhicule aérien, sont guidés dans la deuxième direction (42) ou en direction opposée de celle-ci, sachant que la piste de transport (41 a), supportant les deuxièmes éléments de guidage (30) à l'intérieur de zones de positionnement (50,55), piste de transport dans laquelle des efforts, se produisant transversalement par rapport à la direction longitudinale (43) de la carlingue du véhicule aérien, sont introduits lors du positionnement des récipients de fret (3), est en alignement de manière à produire une limitation (56) avec des éléments de verrouillage (57) de la zone de surface de réglage (53) supplémentaire, **en ce que** la surface d'appui (26) d'un corps de guidage (31) forme le prolongement de la limitation (56).

2. Procédé selon la revendication 1, **caractérisé en ce que** les efforts, introduits par les objets de fret ou les récipients de fret (3) lors du positionnement dans les corps de guidage (31) des deuxième éléments de guidage (30), sont introduits transversalement par rapport à la direction longitudinale de la piste de transport (41 a) ou d'autres pistes de transport (41) dans la piste de transport (41,41a).

3. Procédé selon la revendication 1, **caractérisé en ce que** les objets de fret ou les récipients de fret (3) sont déplaçables, en la première direction (43) et/ou en la deuxième direction (42), sur une face inférieure (4) plane, au moyen d'unités d'entraînement (47,48) pouvant être commutées dans les deux sens de rotation et intégrées dans la surface de seuil (51).

4. Procédé selon la revendication 3, **caractérisé en ce que** les unités d'entraînement (47,48), incorporées dans la surface de sol (51), sont orientées en agissant dans la première direction (43) ou la deuxième direction (42).

5. Procédé selon la revendication 1, **caractérisé en ce que**, pendant le passage d'un objet de fret ou d'un récipient de fret (3), les premiers éléments de guidage (1) prennent une position rétractée et, après passage de la face inférieure de l'objet de fret ou du récipient de fret (3), passent en une position (17) déployée.

6. Procédé selon la revendication 1, **caractérisé en ce que**, après orientation dans la première direction (43), les récipients de fret (3) sont introduits, les uns après les autres, en des emplacements de réglage (64,63; 65,66), ou dans des emplacements de réglage (64,65; 63,66) de la zone de réglage supplémentaire (53).

7. Véhicule aérien muni d'un dispositif pour le positionnement d'objets de fret ou de récipients de fret (3) à l'intérieur du véhicule aérien, dans une première direction (43) sur une surface de sol (51) d'un espace de chargement de fret avec des pistes de transport (41,41a), intégrées dans la surface de sol (51), et des dispositifs d'entraînement (47,48), avec des premiers éléments de guidage (1), pouvant être intégrés dans le sol (51) et pouvant être franchis, de sorte que, en au moins l'une des pistes de transport (41,41a), soient intégrés des deuxièmes éléments de guidage (30) remplaçables, **caractérisés en ce que** la piste de transport (41,41a) recevant les deuxièmes éléments de guidage (30), dans laquelle des efforts sont susceptibles d'être introduits transversalement par rapport à la direction longitudinale (43) de la carlingue du véhicule aérien, est alignée avec l'une des délimitations (56) d'une zone de surface de réglage (53) supplémentaire, prévue dans la zone arrière du véhicule aérien, avec des éléments de verrouillage (57), **en ce qu'**une surface d'appui (26) du corps de guidage (31) forme le prolongement de la délimitation (56).

8. Véhicule aérien selon la revendication 7, **caractérisé en ce que** des corps de guidage (31) des deuxièmes éléments de guidage (30) sont alignés avec des surfaces de butée (72), des éléments de verrouillage (57) de la délimitation (56) d'une zone de surface de réglage (53) supplémentaire de la surface de sol (51).

9. Véhicule aérien selon la revendication 7, **caractérisé en ce** la zone de surface de réglage (53) supplémentaire comprend un ou plusieurs emplacements de réglage (63; 64,65,66), pour supporter des objets de fret ou des récipients de fret (3).

10. Véhicule aérien selon la revendication 7, **caractérisé en ce que** les premiers éléments de guidage (1), les deuxième éléments de guidage (30), ainsi que les éléments de verrouillage (57) sont munis de corps de glissement (70), agissant en une première direction (43) et/ou en une deuxième direction (42) et/ou dans la direction Z.

11. Véhicule aérien selon la revendication 10, **caractérisé en ce que** les corps de glissement (70) comprennent un matériau résistant à l'abrasion, non métallique.

12. Véhicule aérien selon la revendication 10, **caractérisé en ce que** le corps de glissement (70) est logé de façon remplaçable dans les éléments de guidage (1,30) ou les éléments de verrouillage (57).

13. Véhicule aérien selon la revendication 10, **caractérisé en ce que** le corps de glissement (70) est maintenu, par une liaison à ajustement de forme, par les éléments de guidage (1,30) ou les éléments de verrouillage (57).

14. Véhicule aérien selon la revendication 10, **caractérisé en ce que** le corps de glissement (70) est collé, dans les éléments de guidage (1,30) ou les éléments de verrouillage (57).

15. Véhicule aérien selon la revendication 10, **caractérisé en ce que** le corps de glissement (70) est maintenu, par pré-contrainte des éléments de guidage (1,30) ou des éléments de verrouillage (57), dans ceux-ci.

16. Véhicule aérien selon la revendication 10, **caractérisé en ce que** le corps de glissement (70) est supporté sur les éléments de guidage (1,30) ou les éléments de verrouillage (57), par vissage, rivetage ou encliquetage.

17. Véhicule aérien selon la revendication 7, **caractérisé en ce que** les premiers éléments de guidage (1) sont munis d'un dispositif de verrouillage (10,11), fixant le guidage pivotant (7,9) en une position pénétrant dans la surface de sol (51).

18. Véhicule aérien selon la revendication 17, **caractérisé en ce que** le dispositif de verrouillage (10,11) peut être desserré, de façon manuelle, électromagnétique ou au pied.

19. Véhicule aérien selon la revendication 7, **caractérisé en ce que** les pistes de transport (41,41a) et les tronçons de pistes de transport (44) sont munis d'ouvertures (54), dans lesquelles s'engagent des éléments de fixation des premier et deuxième éléments de guidage (1,30).

20. Véhicule aérien selon la revendication 7, **caractérisé en ce que** les deuxième éléments de guidage (30) sont susceptibles d'être passés avec le corps de guidage (31) susceptible d'être dressé, manuellement, au pied, ou de façon électromécanique, de leur position (33) placée à plat à une position (31) dressée.

21. Véhicule aérien selon la revendication 7, **caractérisé en ce que** les deuxième éléments de guidage (30) comprennent une tige de déverrouillage (35), après l'actionnement de laquelle le corps de guidage (31) passe à sa position dressée (32).

22. Véhicule aérien selon la revendication 7, **caractérisé en ce que** les boîtiers de logement (2,39) des premiers et/ou des deuxièmes éléments de guidage (1, 30) comprennent des boulons de maintien (5,6), dont les extrémités de boulons (18,19) sont sollicitées par des éléments de pré-contrainte intégrés, pour blocage dans les pistes de transport (41,41a,44).
